(19) Europäisches Patentamt
European Patent Office
Office européen des brevets

(11) Veröffentlichungsnummer: **0 360 073**
**A2**

(12) **EUROPÄISCHE PATENTANMELDUNG**

(21) Anmeldenummer: 89116492.3

(22) Anmeldetag: 07.09.89

(51) Int. Cl.5: C08G 64/06

(30) Priorität: 20.09.88 DE 3831886

(43) Veröffentlichungstag der Anmeldung:
28.03.90 Patentblatt 90/13

(84) Benannte Vertragsstaaten:
DE FR GB IT NL

(71) Anmelder: BAYER AG
D-5090 Leverkusen 1 Bayerwerk(DE)

(72) Erfinder: Leitz, Edgar, Dr.
Goethestrasse 63
D-4047 Dormagen(DE)
Erfinder: Bottenbruch, Ludwig, Dr.
Wöhlerstrasse 5
D-4150 Krefeld(DE)
Erfinder: Ott, Karl-Heinz, Dr.
Paul-Klee-Strasse 54
D-5090 Leverkusen(DE)
Erfinder: Jung, Alfred, Dr.
Bodelschwinghstrasse 12
D-4150 Krefeld 1(DE)
Erfinder: Grigo, Ulrich, Dr.
Michelsheide 9
D-4152 Kempen 3(DE)

(54) **Verfahren zur Herstellung von aromatischen Polycarbonaten.**

(57) Gegenstand der Erfindung ist ein Verfahren zur Herstellung von aromatischen Polycarbonaten aus cyclischen aromatischen Carbonat-Oligomeren in Gegenwart von aprotischen organischen Lösungsmitteln bei niedrigen Temperaturen.

EP 0 360 073 A2

## Verfahren zur Herstellung von aromatischen Polycarbonaten

Gegenstand der Erfindung ist ein Verfahren zur Herstellung von aromatischen Polycarbonaten aus cyclischen aromatischen Carbonat-Oligomeren in Gegenwart von aprotischen organischen Lösungsmitteln bei niedrigen Temperaturen.

US 3 386 954 beschreibt die Herstellung von hochmolekularen Polycarbonaten durch Polymerisation von cyclischen Carbonat-Oligomeren bei Temperaturen um 200° C mit z.B. Metalloxiden oder Salzen von Carbonsäuren als Katalysatoren.

EP 0 162 379 beschreibt die Herstellung von linearen Polycarbonaten aus cyclischen Carbonat-Oligomeren bei Temperaturen bis zu 350° C unter Verwendung von Aluminaten, Titanaten, Organozinnverbindungen oder Salzen von Carbonsäuren als Katalysatoren.

EP 0 198 338 beschreibt die Herstellung von linearen Polycarbonaten durch Polymerisation von cyclischen Carbonat-Oligomeren bei Temperaturen von 250 bis 300° C mittels Borverbindungen als Katalysatoren.

EP 0 273 143 beschreibt die Polymerisation von cyclischen Carbonat-Oligomeren bei Temperaturen von 200° C bis 350° C, wobei als Katalysatoren Polymere mit Alkaliphenolat-Gruppen verwendet werden.

Es hat sich nun gezeigt, daß die Herstellung von aromatischen Polycarbonaten aus cyclischen aromatischen Carbonat-Oligomeren unter schonenden Bedingungen, d.h. bei niedrigen Temperaturen, unter Verwendung eines organischen aprotischen Lösungsmittels möglich ist.

Die vorliegende Erfindung betrifft nun ein Verfahren zur Herstellung von aromatischen Polycarbonaten aus cyclischen Carbonat-Oligomeren mit folgenden Merkmalen:

1. Die Polymerisation wird im Sinne einer "lebenden" anionischen Polymerisation in Gegenwart von aprotischen organischen Lösungsmitteln unter Verwendung von alkalimetallorganischen Verbindungen als Initiatoren durchgeführt.

2. Die Polymerisation wird in einem Temperaturbereich von - 50° C bis + 100° C, bevorzugt - 20° C bis + 80° C, besonders bevorzugt 0° C bis + 60° C durchgeführt.

3. Das Monomer/Lösungsmittel-Gewichtsverhältnis liegt im Bereich von 1 bis 50 : 100, vorzugsweise 5 bis 35 : 100, besonders bevorzugt 8 bis 25 : 100.

Eine bevorzugte Ausführungsform des erfindungsgemäßen Verfahrens ist dadurch gekennzeichnet, daß

1. als Initiatoren Arylalkalimetall- und Alkylalkalimetall-Verbindungen sowie Alkoholate der Alkalimetalle, bevorzugt n-Butyllithium, s-Butyllithium, Naphthalin-Kalium, Naphthalin-Natrium, Kalium-Phenolat, Kalium-tert.-Butylat, besonders bevorzugt n-Butyl- und s-Butyllithium Verwendung finden,

2. als aprotische organische Lösungsmittel cyclische Ether oder aromatische oder aliphatische Kohlenwasserstoffe oder Mischungen aus cyclischen Ethern und aromatischen oder aliphatischen Kohlenwasserstoffen, vorzugsweise Tetrahydrofuran, Mischungen aus Tetrahydrofuran und Toluol sowie Toluol, besonders bevorzugt Tetrahydrofuran eingesetzt werden,

3. das Monomer/Lösungsmittel-Gewichtsverhältnis 8 bis 25 : 100 beträgt.

4. die Polymerisation in einem Temperaturbereich von 0° C bis + 60° C durchgeführt wird,

5. die Polymerisation in inerter Atmosphäre (Stickstoff, Argon) und unter Ausschluß von Luftsauerstoff und Luftfeuchtigkeit durchgeführt wird.

6. eine Desaktivierung der polymerisationsaktiven Zentren erfolgt und

7. sich das Molekulargewicht des Polymeren über das Monomer/Initiator-Verhältnis einstellen läßt.

Desaktivatoren in Sinne der Erfindung sind protische Verbindungen wie z.B. Wasser, Alkohole, Säure oder Gemische daraus. Bevorzugte Desaktivatoren sind Mischungen aus Methanol/Salzsäure und Methanol/Phosphorsäure.

Nach dem erfindungsgemäßen Verfahren werden cyclische aromatische Carbonat-Oligomere zu linearen aromatischen Homopolycarbonaten polymerisiert.

Cyclische aromatische Carbonat-Oligomere im Sinne der Erfindung sind cyclische Verbindungen der Formel (I),

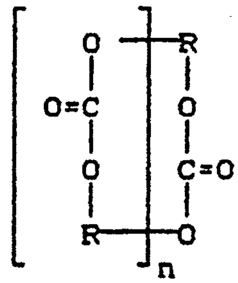

(I)

worin
n 1 bis 30, bevorzugt 1 bis 20, besonders bevorzugt 1 bis 12 und
R ein Diphenol der Formel (II)

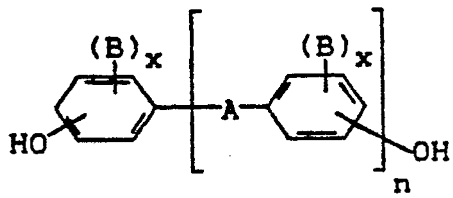

(II)

worin
A Einfachbildung, $C_1$-$C_5$-Alkylen, $C_2$-$C_5$-Alkyliden, $C_5$-$C_6$-Cycloalkyliden, -O-, -SO-, -S-, -$SO_2$-, -CO- oder ein Rest der Formel (IIa),

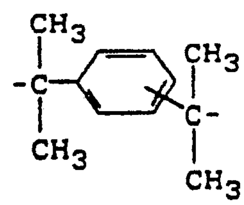

(IIa)

B Chlor, Brom oder Methyl,
X 0, 1 oder 2 und
n 1 oder 0 sind.

Die Diphenole sind bekannt oder nach bekannten Verfahren herstellbar.

Geeignete Diphenole der Formel (II) sind
Hydrochinon,
Resorcin,
Dihydroxyphenyle,
Bis-(hydroxyphenyl)-$C_1$-$C_5$-alkane,
Bis-(hydroxyphenyl)-$C_1$-$C_6$-cycloalkane,
Bis-(hydroxyphenyl)-ether,
Bis-(hydroxyphenyl)-sulfoxide,
Bis-(hydroxyphenyl)-ketone,
Bis-(hydroxyphenyl)-sulfide,
Bis-(hydroxyphenyl)-sulfone und
α,α′-Bis-(hydroxyphenyl)-diisopropylbenzole sowie deren kernchlorierte, kernbromierte oder kernmethylierte Derivate.

Bevorzugte Diphenole der Formel (II) sind 2,2-Bis-(4-hydroxyphenyl)-propan, 2,2-Bis-(3,5-dimethyl-4-hydroxyphenyl)-propan, 2,4-Bis-(4-hydroxyphenyl)-2-methylbutan, 1,1-Bis-(4-hydroxyphenyl)-cyclohexan, 4,4-dihydroxyphenylsulfod, 4,4-Diphydroxyphenylsulfon sowie deren di-und tetrabromierte oder chlorierte Derivate wie 2,2-Bis-(3-chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Besonders bevorzugtes Diphenol ist 2,2-Bis-(4-hydroxyphenyl)-propan.

Die Herstellung der erfindungsgemäß einzusetzenden cyclischen, aromatischen Carbonat-Oligomeren ist bekannt und beispielsweise in EP 0 162 379, EP 0 224 131, DE 2 937 332, DE 3 717 626, US 3 274 214, US 3 422 119, US 3 155 683 und DE-A 1 229 101 beschrieben.

Die aus cyclischen aromatischen Carbonat-Oligomeren nach dem erfindungsgemäßen Verfahren herstellbaren aromatischen Polycarbonate haben mittlere Gewichtsmittelmolekulargewichte $M_w$ von 5.000 bis 200.000 g/mol, vorzugsweise 10.000 bis 100.000 g/mol (ermittelt durch Gelchromatographie nach vorheriger Eichung).

## Beispiele

Herstellung der cyclischen Bisphenol A-Carbonat-Oligomeren

Unter Stickstoff wurden 2,4 g (0,0024 mol) Triethylamin, 600 ml Methylenchlorid, 1800 ml Wasser und 36 ml 45%ige Natronlauge (0,6 mol) vorgelegt. Hierzu ließ man bei langsamer Rührgeschwindigkeit (149 U/min) im Verlauf einer Stunde gleichzeitig eine Lösung von 9,72 g (0,096 mol) Triethylamin in 600 ml Methylenchlorid und eine Lösung von 84,8 g (0,24 mol) Bisphenol A- Bischlorkohlensäureester in 1200 ml Methylenchlorid bei Raumtemperatur zutropfen. Nach 10minütigem Nachrühren wurde mit 3,6 %iger Salzsäure hydrolisiert und eine Phasentrennung durchgeführt. Die wässrige Phase wurde mit Methylenchlorid gewaschen. Die organischen Phasen wurden vereinigt, mit Wasser gewaschen und das Rohprodukt durch Ausdampfung des Lösungsmittels isoliert (Ausbeute: 58,8 g (90 g)).

Die reinen cyclischen Bisphenol A-Carbonat-Oligomeren wurden durch Extraktion des Rohproduktes mit Aceton gewonnen (Ausbeute: 23,5 g (40 %) bezogen auf Rohprodukt).

Die HPLC-Analyse ergab folgende Cyclen-Verteilung:

| Anzahl der Bisphenol A-Carbonat-Einheiten im Cyclus | Menge Gew.-% |
|---|---|
| 2 | 5 |
| 3 | 25 |
| 4 | 19 |
| 5 | 15 |
| 6 | 10 |
| 7 | 8 |
| 8 | 6 |
| 9 | 4 |
| > 9 | 8 |

relative Viskosität : 1,04
(gemessen in $CH_2Cl_2$ bei 20 °C, an einer 2 gew.-%igen Lösung)

### Polymerisationsversuche

### Beispiel 1

Zu einer Lösung von 5 g cyclischen Bisphenol A-Carbonat-Oligomeren ($\pi_{rel}$ = 1,04) in 50 ml Tetrahydrofuran wurden bei Raumtemperatur 0,25 ml sec.-Butyllithium (1,3 molare Lösung in Cyclohexan) unter Rühren und unter Stickstoff gegeben. Anschließend wurde die Temperatur auf 50 °C erhöht. Die Reaktionszeit bei dieser Temperatur betrug 1 Stunde, wobei eine deutliche Viskositätserhöhung der Lösung auftrat. Das Reaktionsgemisch wurde dann in 300 ml Methanol/1 molare Phosphorsäure (99 : 1) gegossen. Das Polymere wurde abgetrennt, mit Methanol neutral gewaschen und getrocknet.

Ausbeute: 4,51 g (90,2 %)
relative Viskosität $\pi_{rel}$: 1,53
(gemessen in $CH_2Cl_2$ bei 20° C, an einer 2 gew.-%igen Lösung)

Beispiel 2

Zu einer Lösung von 5 g cyclischen Bisphenol A-Carbonat-Oligomeren in 50 ml Tetrahydrofuran wurden bei 25° C 0,25 ml sec.-Butyllithium (1,3 molare Lösung in Cyclohexan) unter Rühren und unter Stickstoff gegeben. Die Reaktionszeit bei 25° C betrug 1 Stunde, wobei eine deutliche Viskositätserhöhung auftrat. Das Reaktionsgemisch wurde dann in 300 ml Methanol/l molare Phosphorsäure (99 : 1) gegossen. Das Polymere wurde abgetrennt, mit Methanol neutral gewaschen und getrocknet.
Ausbeute: 4,1 g (82 %)
relative Viskosität $\pi_{rel}$: 1,61
(gemessen in $CH_2Cl_2$ bei 20° C, an einer 2 gew.-%igen Lösung)

Beispiel 3

Zu einer Lösung von 10 g cyclischen Bisphenol A-Carbonat Oligomeren in 100 ml Tetrahydrofuran wurden bei 15° C 0,5 ml sec.-Butyllithium (1,3 molare Lösung in Cyclohexan) unter Rühren und unter Stickstoff gegeben. Die Reaktionszeit bei dieser Temperatur betrug 1 Stunde, wobei eine deutliche Viskositätserhöhung auftrat. Das Reaktionsgemisch wurde dann mit 12 ml Methanol/l molare wässrige Phosphorsäure (1 : 1) versetzt und das Reak tionsprodukt in Methanol gefällt, isoliert und getrocknet.
Ausbeute: 8,96 g (89,6 %)
relative Viskosität $\pi_{rel}$: 1,73
(gemessen in $CH_2Cl_2$ bei 20° C, an einer 2 gew.-%igen Lösung)
GPC-Analyse (Bisphenol A-Polycarbonat-Eichung): $M_w$ = 26.500 g/mol

Beispiel 4

Zu einer Lösung von 10 g cyclischen Bisphenol A-Carbonat-Oligomeren in 66 ml Tetrahydrofuran wurden bei Raumtemperatur 0,55 ml sec.-Butyllithium (1,3 molare Lösung in Cyclohexan) unter Rühren und unter Stickstoff gegeben. Die Reaktionszeit betrug bei dieser Temperatur 30 min., wobei eine deutliche Viskositätserhöhung auftrat. Das Reaktionsgemisch wurde dann in 500 ml Methanol/l molare Phosphorsäure (99 : 1) gegossen. Das gefällte Polymere wurde abgetrennt, mit Methanol neutral gewaschen und getrocknet.
Ausbeute: 9,9 g (99 %)
relative Viskosität $\pi_{rel}$: 1,78
(gemessen in $CH_2Cl_2$ bei 20° C, an einer 2 gew.-%igen Lösung)

Beispiel 5

Zu einer Lösung von 10 g cyclischen Bisphenol A-Carbonat-Oligomeren in 66 ml Tetrahydrofuran wurden bei Raumtemperatur 0,15 ml sec.-Butyllithium (1,3 molare Lösung in Cyclohexan) unter Rühren und unter Stickstoff gegeben. Die Reaktionszeit betrug bei dieser Temperatur 165 min., wobei eine deutliche Viskositätserhöhung auftrat. Das Reaktionsgemisch wurde dann in 500 ml Methanol/l molare Phosphorsäure (99 : 1) gegossen. Das gefällte Polymere wurde abgetrennt, mit Methanol neutral gewaschen und getrocknet.
Ausbeute: 9,3 g (93 %)
relative Viskosität $\pi_{rel}$: 3,12
(gemessen in $CH_2Cl_2$ bei 20° C, an einer 2 gew.-%igen Lösung)
GPC-Analyse (Bisphenol A-Polycarbonat-Eichung: $M_w$ = 70.000 g/mol

Beispiel 6

Zu einer Lösung von 5 g cyclischen Bisphenol A-Carbonat-Oligomeren in 50 ml Tetrahydrofuran wurden bei 35° C 0,25 ml sec.-Butyllithium (1,3 molare Lösung in Cyclohexan) unter Rühren und unter Stickstoff gegeben. Nach einer Reaktionszeit von 20 min. bei 35° C wurden 15 ml Lösung entnommen und in 100 ml Methanol/l molare Phosphorsäure (99 : 1) gegeben. Das ausgefallene Produkt wurde isoliert und getrocknet.
Asubeute: 1,48 g
relative Viskosität $\pi_{rel}$: 1,54
(gemessen in $CH_2Cl_2$ bei 20° C, an einer 2 Gew.-%igen Lösung)
GPC-Analyse (Bisphenol A-Polycarbonat-Eichung: $M_w$ = 19.500 g/mol

Nach Entnahme der Probe wurde dem Reaktionsgemisch eine Lösung von 5 g cyclischen Bisphenol A-Carbonat-Oligomeren in 30 ml Tetrahydrofuran zugesetzt. Die Reaktionszeit betrug nun 1 Stunde bei 35° C. Das Reaktionsgemisch wurde dann in 500 ml Methanol/l molare Phosphorsäure gegossen. Das Polymere wurde isoliert, mit Methanol neutral gewaschen und getrocknet.
Asubeute: 7,4 g
relative Viskosität $\pi_{rel}$: 1,87
(gemessen in $CH_2Cl_2$ bei 20° C, an einer 2 gew.-% igen Lösung)
GPC-Analyse (Bisphenol A-Polycarbonat-Eichung): $M_w$ = 30.000 g/mol

## Beispiel 7

Zu einer Lösung von 5 g cyclischen Bisphenol A-Carbonat-Oligomeren aus 50 ml Toluol und 25 ml Tetrahydrofuran wurden bei Raumtemperatur 25 ml sec.-Butyllithium (1,3 molare Lösung in Cyclohexan) unter Rühren und unter Stickstoff gegeben. Die Reaktionszeit betrug bei dieser Temperatur 1,5 Stunden, wobei eine deutliche Viskositätszunahme auftrat. Das Reaktionsgemisch wurde dann in 300 ml Methanol/l molare Phosphorsäure (99 : 1) gegossen. Das Polymere wurde abgetrennt, mit Methanol neutral gewaschen und getrocknet.
Ausbeute: 4,35 g (87 %)
relative Viskosität $\pi_{rel}$: 1,33
(gemessen in $CH_2Cl_2$ bei 20° C, an einer 2 gew.-%igen Lösung)

## Beispiel 8

Zu einer Lösung von 5 g cyclischen Bisphenol A-Carbonat-Oligomeren in 50 ml Tetrahydrofuran wurden bei Raumtemperatur 0,35 ml Naphthalin-Kalium (0,89 molare Lösung in Tetrahydrofuran) unter Rühren und unter Stickstoff gegeben. Die Reaktionszeit betrug bei Raumtemperatur 1 Stunde, wobei eine deutliche Viskositätserhöhung auftrat. Das Reaktionsgemisch wurde dann in 300 ml Methanol/l molare Phosphorsäure (99 : 1) gegossen. Das Polymere wurde abgetrennt, mit Methanol neutral gewaschen und getrocknet.
Ausbeute: 4,72 g (94,4 %)
relative Viskosität $\pi_{rel}$: 1,78
(gemessen in $CH_2Cl_2$ bei 20° C, an einer 2 gew.-%igen Lösung)

## Beispiel 9

Zu einer Lösung von 5 g cyclischen Bisphenol A-Carbonat-Oligomeren in 50 ml Tetrahydrofuran wurden bei Raumtemperatur 1,25 ml Kalium-Phenolat (0,265 molare Lösung in Tetrahydrofuran) unter Rühren und unter Stickstoff gegeben. Die Reaktionszeit betrug bei dieser Temperatur 1 Stunde, wobei eine deutliche Viskositätszunahme auftrat. Das Reaktionsgemisch wurde dann in 300 ml Methanol/l molare Phosphorsäure (99 : 1) gegossen. Das Polymere wurde abgetrennt, mit Methanol neutral gewaschen und getrocknet.
Ausbeute: 4,73 g (94,6 %)
relative Viskosität $\pi_{rel}$: 1,41
(gemessen in $CH_2Cl_2$ bei 20° C, an einer 2 gew.-%igen Lösung)

Als Vergleich sind in der Tabelle die relativen Viskositäten und Molekulargewichte von Bisphenol A-Polycarbonat Handelstypen angegeben.

| | $n_{rel}$ 1) | Mw 2) (g/mol) |
|---|---|---|
| Makrolon® 3200 | 2,05 | 31.000 |
| Makrolon® 2800 | 1,91 | 27.000 |
| Makrolon® 2600 | 1,85 | 24.000 |
| Makrolon® 2400 | 1,43 | 22.000 |

1) ermittelt an 2gew.-%iger Lösung in $CH_2Cl_2$ bei 20 °C
2) GPC-Analyse unter Verwendung einer Eichbeziehung für Bisphenol A-Polycarbonat

## Ansprüche

1. Verfahren zur Herstellung linearer aromatischer Polycarbonate, dadurch gekennzeichnet, daß man cyclische aromatische Carbonat-Oligomere der Formel (I)

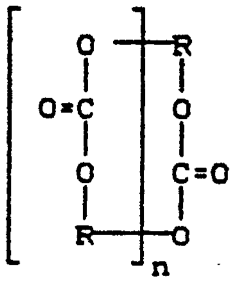

(I)

worin
n 1 bis 30 und
R ein Diphenol der Formel (II)

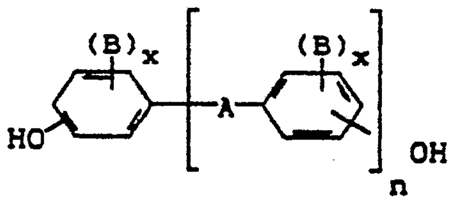

(II)

worin
A Einfachbildung, $C_1$-$C_5$-Alkylen, $C_2$-$C_5$-Alkyliden, $C_5$-$C_6$-Cycloalkyliden, -O-, -SO-, -S-, $-SO_2-$, -CO- oder ein Rest der Formel (IIa),

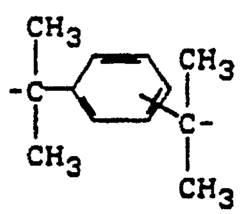

(IIa)

B Chlor, Brom oder Methyl,
X 0, 1 oder 2 und
n 1 oder 0 sind,

in Gegenwart von aprotischen organischen Lösungsmitteln unter Ausschluß von Luftsauerstoff und Luftfeuchtigkeit polymerisiert, wobei alkalimetallorganische Verbindungen als Initiatoren verwendet werden, das Monomer/Lösungsmittelverhältnis im Bereich von 1 Gew.-Teil bis 50 Gew.-Teile Monomer pro 100 Gew.-Teile Lösungsmittel liegt und die Polymerisationstemperatur zwischen - 50° C und + 100° C liegt.

2. Verfahren nach Anspruch 1, dadurch gekennzeichnet, daß das Monomer/Lösungsmittel-Gewichtsverhältnis 8 Gew.-Teile bis 25 Gew.-Teile Monomer pro 100 Gew.-Teile Lösungsmittel beträgt und die Polymerisationstemperatur im Bereich von 0° C bis + 60° C liegt.